# EUROPEAN PATENT SPECIFICATION

(11) **EP 4 478 585 B1**
(45) Date of publication and mention of the grant of the patent: **01.04.2026**
(21) Application number: 23779579.4
(22) Date of filing: 14.03.2023
(51) Int. Cl.: H02K 1/16, H02K 3/46, H02K 15/04, H02K 1/14, H02K 1/18, H02K 3/52, H02K 5/24

(54) **ROTATING ELECTRICAL MACHINE, MANUFACTURING METHOD THEREFOR, COMPRESSOR, BLOWER, AND REFRIGERATION DEVICE EQUIPPED WITH ROTATING ELECTRICAL MACHINE**
ELEKTRISCHE DREHMASCHINE, HERSTELLUNGSVERFAHREN DAFÜR, VERDICHTER, GEBLÄSE UND KÜHLVORRICHTUNG MIT DER ELEKTRISCHEN DREHMASCHINE
MACHINE ÉLECTRIQUE ROTATIVE, SON PROCÉDÉ DE FABRICATION, COMPRESSEUR, SOUFFLANTE ET DISPOSITIF DE RÉFRIGÉRATION ÉQUIPÉ D'UNE MACHINE ÉLECTRIQUE ROTATIVE

(30) Priority: 30.03.2022 JP 2022056571
(43) Date of publication of application: 18.12.2024
(73) Proprietor: DAIKIN INDUSTRIES, LTD., Osaka-shi, Osaka 530-0001 (JP)
(72) Inventor: SHIMIZU, Shunsuke, Osaka-shi, Osaka 530-0001 (JP); HIRANO, Masaki, Osaka-shi, Osaka 530-0001 (JP); NAKA, Shojiro, Osaka-shi, Osaka 530-0001 (JP); KITSU, Yoshimi, Osaka-shi, Osaka 530-0001 (JP)
(74) Representative: Goddar, Heinz J.
(86) International application number: PCT/JP2023/009921
(87) International publication number: WO 2023/189561

(56) References cited:
- EP-A1- 3 678 285
- CZ-A3- 2 018 496
- DE-A1- 102020 202 062
- JP-A- 2002 233 090
- JP-A- 2003 343 439
- JP-A- 2003 343 439
- JP-A- 2007 181 292
- JP-A- 2007 181 292
- JP-A- 2014 027 759
- US-A1- 2005 127 775

## Description

### TECHNICAL FIELD

The present invention relates to a rotating electrical machine, a compressor, a fan, and a refrigeration apparatus equipped with the rotating electrical machine.

### BACKGROUND ART

DE 10 2020 202062 A1 discloses a rotating electrical machine according to the preamble of claim 1.

US 2005/127775 A1 discloses standard axial insulators for an internal stator topology.

CZ 2 018 496 A3 is a further prior art document.

A rotating electrical machine including a rotor and a stator has been known. Patent Document 1 discloses a rotating electrical machine including a rotor on the inside diameter side and a stator on the outside diameter side. An elastic member is provided between the outer stator and a casing to keep vibrations due to the electromagnetic force acting between the rotor and the stator from propagating to the outside. 1A

### CITATION LIST

### PATENT DOCUMENT

Patent Document 1: Japanese Unexamined Patent Publication No. 2007-189812

### SUMMARY OF THE INVENTION

### TECHNICAL PROBLEM

To form a structure that keeps vibrations due to the electromagnetic force acting between the rotor and the stator from propagating, a first core serving as an inner core and a second core serving as an outer core may be provided on a stator iron core of the stator, and an elastically deformable member may be provided between the first core and the second core to absorb vibrations. However, the stator iron core is provided with teeth extending radially inward from the first core, and when windings are wound around the teeth, stress is generated along with deformation corresponding to the axial reciprocating displacement of the teeth. If this stress concentrates on the elastically deformable member forming low-strength part, deformation of the elastically deformable member or any other similar cause is assumed, leading to breakage of the stator iron core.

It is an object of the present invention to reduce breakage of the stator iron core during winding of windings around teeth.

### SOLUTION TO THE PROBLEM

A first aspect is directed to a rotating electrical machine (30) according to claim 1.

According to the first aspect, the mechanism configured to reduce the axial displacement of the tooth (77) during the winding of the winding (73) around the tooth (77) is provided. This relaxes the concentration of stress generated along with the deformation corresponding to the axial reciprocating displacement of the tooth (77) on the elastically deformable member (753) forming low-strength part. This can reduce breakage of the stator iron core (71) during winding of the winding (73) around the tooth (77).

According to the invention, the rigid member overlaps with the first core portion (751) and the second core portion (752) as viewed in the axial direction. As a result, the elastically deformable member (753) forming the low-strength part is covered with the rigid member so as to be reinforced. This reduces the axial displacement of the tooth (77) during winding of the winding (73) around the tooth (77).

According to the invention, the rigid member is an insulator (72) interposed between the tooth (77) and the winding (73). Thus, the insulator (72) has the inherent function of providing insulation while being interposed between the tooth (77) and the winding (73), and functions also as a mechanism for reducing the axial displacement of the tooth (77) during the winding of the winding (73) around the tooth (77).

A second aspect is an embodiment of the first aspect. In the second aspect, the mechanism is provided on a region located radially from the tooth (77).

According to the second aspect, the mechanism is provided on a region most significantly affected by the winding of the winding (73) around the tooth (77). This can reduce the axial displacement of the tooth (77) during the winding of the winding (73) around the tooth (77).

A third aspect is an embodiment of any one of the first to second aspects. In the third aspect, the tooth (77) includes a plurality of teeth (77) spaced apart from one another in a circumferential direction, and the mechanism includes a plurality of mechanisms independent of one another for the respective teeth (77).

According to the third aspect, the mechanisms (72) configured to reduce the axial displacement of the teeth (77) during the winding of the windings (73) around the teeth (77) are independent of one another for the respective teeth (77). Thus, each of the teeth (77) around which the windings (73) are wound is independently displaced in the axial direction. This can substantially prevent the displacement from affecting the other teeth (77) via the mechanisms.

A fourth aspect is an embodiment of any one of the first to third aspects. In the fourth aspect, the tooth (77) extends radially inward from the first core portion (751).

According to the fourth aspect, the tooth (77) is provided on the inside of the stator (70). Thus, the rotating electrical machine (30) is configured to include the rotor (60) located radially inward and the stator (70) located radially outward.

A fifth aspect is directed to a compressor (10) including: the rotating electrical machine (30) of any one of the first to fourth aspects.

A sixth aspect is directed to a fan (90) including: the rotating electrical machine (30) of any one of the first to fifth aspects.

A seventh aspect is directed to a refrigeration apparatus (1) including: the rotating electrical machine (30) of any one of the first to sixth aspects.

### BRIEF DESCRIPTION OF THE DRAWINGS

FIG. 1 illustrates a schematic configuration of a refrigeration apparatus (1) according to a first embodiment.
FIG. 2 is a longitudinal sectional view of a compressor (10) according to the first embodiment.
FIG. 3 is a plan view of a rotor (60) of an electric motor (30) according to the first embodiment.
FIG. 4 is a plan view of a stator iron core (71) of the electric motor (30) according to the first embodiment.
FIG. 5 is a plan view of a state where insulators (72) are stacked on the stator iron core (71) of the electric motor (30) according to the first embodiment.
FIG. 6 is a partial longitudinal sectional view of the stator (70) of the electric motor (30) according to the first embodiment.
FIG. 7 is a partial longitudinal sectional view of a state where the insulators (72) of the stator (70) in the electric motor (30) according to the first embodiment are partially removed.
FIG. 8 is a partial longitudinal sectional view of a stator (70) in a variation of the electric motor (30) according to the first embodiment.
FIG. 9 is a plan view of a state where the insulators (72) are stacked on the stator iron core (71) in another variation of the electric motor (30) according to the first embodiment.
FIG. 10 is a plan view of a state where insulators (72) are stacked on a stator iron core (71) of an electric motor (30) according to a second embodiment not belonging to the claimed invention.
FIG. 11 is a partial longitudinal sectional view of a state where the stator iron core (71) in the electric motor (30) according to the second embodiment is fixed by a fixture (80).
FIG. 12 is a side view of a fan (90).

### DESCRIPTION OF EMBODIMENTS

Embodiments of the present invention will be described in detail below with reference to the drawings. The present invention is not limited to the embodiments shown below, and various changes can be made within the scope without departing from the technical concept of the present disclosure. Each of the drawings is intended to illustrate the present invention conceptually, and dimensions, ratios, or numbers may be exaggerated or simplified as necessary for the sake of ease of understanding. Like references used for the first embodiment, the second embodiment, and other embodiments are used for like parts herein.

### [First Embodiment]

### (Refrigeration Apparatus (1))

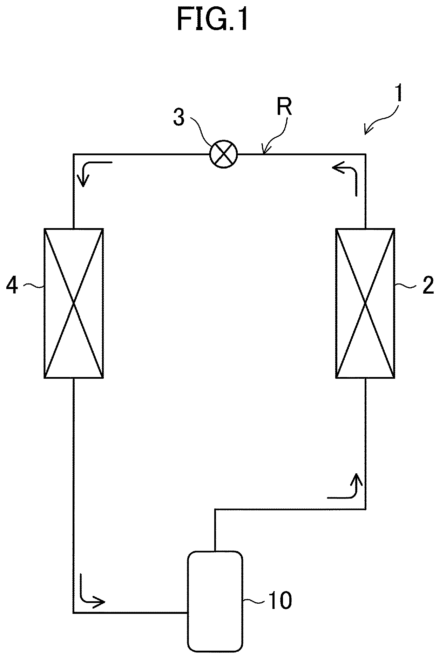

FIG. 1 illustrates a refrigeration apparatus (1). The refrigeration apparatus (1) includes a refrigerant circuit (R) filled with refrigerant. The refrigerant circuit (R) includes a compressor (10), a radiator (2), a decompression mechanism (3) configured as an expansion valve, and an evaporator (4).

The refrigerant circuit (R) performs a vapor compression refrigeration cycle. In the refrigeration cycle, the refrigerant is compressed by the compressor (10), and then dissipates heat to the air in the radiator (2). The refrigerant having dissipated heat is decompressed by the decompression mechanism (3), and then evaporates in the evaporator (4). The evaporated refrigerant is sucked into the compressor (10).

The refrigeration apparatus (1) may be an air conditioner. The air conditioner may be any one of a cooling-only apparatus, a heating-only apparatus, or a cooling and heating machine switchable between cooling and heating. The air conditioner configured as the cooling and heating machine has a switching mechanism, such as a four-way switching valve, that switches the direction of circulation of the refrigerant. The refrigeration apparatus (1) may be a water heater, a chiller unit, or a cooling apparatus configured to cool air in an internal space.

### (Compressor (10))

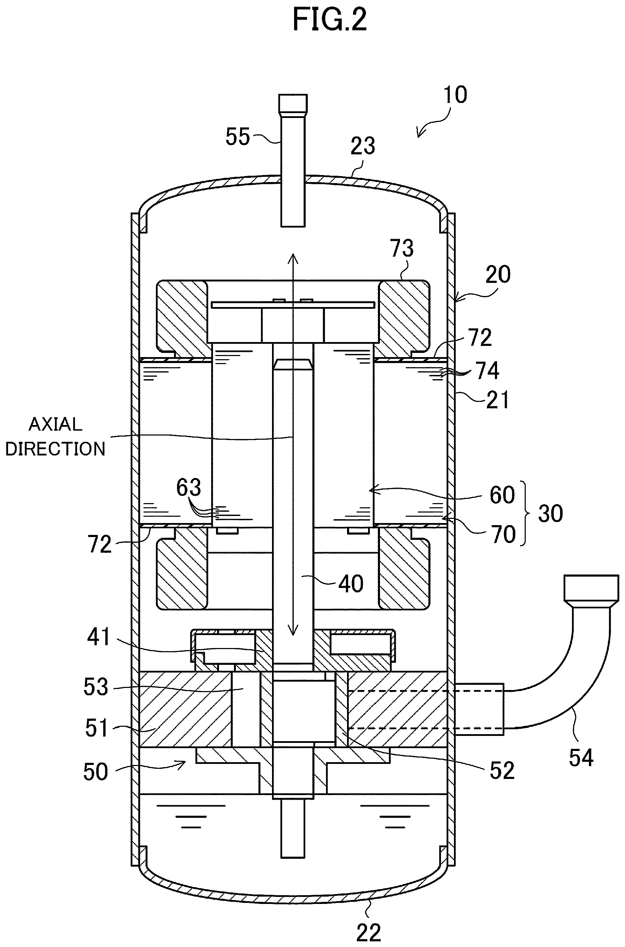

FIG. 2 illustrates a longitudinal sectional view of the compressor (10). The longitudinal sectional view as used herein means a radial view of a cross section assumed to be taken along a plane along an axial direction. The compressor (10) includes a casing (20), an electric motor (30), a drive shaft (40), and a compression mechanism (50). The compressor (10) is a rotary compressor. Precisely, the compressor (10) is a compressor of an oscillating piston type. The compressor (10) may be a scroll compressor, a screw compressor, or a turbo compressor.

### <Casing (20)>

The casing (20) is a hermetic container that houses the electric motor (30), the drive shaft (40), and the compression mechanism (50). The casing (20) is made of a metal material.

The casing (20) has a barrel (21), a bottom portion (22), and a top portion (23). The barrel (21) is a tubular member having two open axial ends. In this example, the axial direction of the barrel (21) corresponds to the vertical direction. The bottom portion (22) is a member that closes the lower opening of the barrel (21). The top portion (23) is a member that closes the upper opening of the barrel (21).

### <Electric Motor (30)>

The electric motor (30) is provided while being supported by an upper portion inside the casing (20). The electric motor (30) is a magnet embedded type rotating electrical machine. The electric motor (30) is an inner-rotor electric motor. Thus, the electric motor (30) includes a rotor (60) located radially inward and configured to be rotatable around the rotation axis, and a stator (70) located radially outward and spaced apart from the rotor (60) to face the rotor (60) in the radial direction.

In the following description, the axial direction corresponds to the direction in which the rotation axis of the rotor (60) extends. The radial direction is orthogonal to the axial direction. The circumferential direction corresponds to a direction along the direction of rotation of the rotor (60).

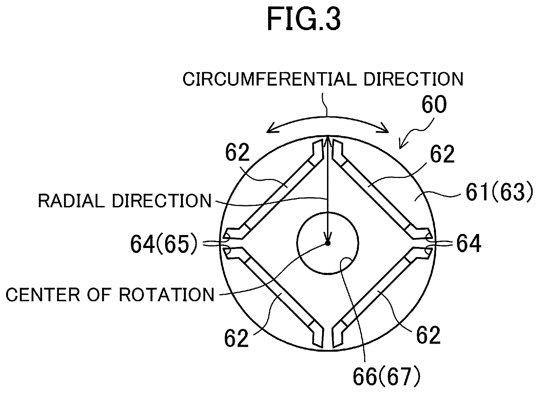

FIG. 3 is a plan view of the rotor (60). The plan view as used herein means an axial view of a cross section assumed to be taken along a plane along the circumferential direction and the radial direction. As illustrated in FIG. 3, the rotor (60) includes a rotor iron core (61) and permanent magnets (62).

The rotor iron core (61) is a so-called laminated core including a plurality of toroidal rotor plates (63) laminated in the axial direction. The rotor plates (63) are configured as pressed electromagnetic steel sheets, for example. Each adjacent pair of the rotor plates (63) is fixed to each other through crimping, for example.

Each rotor plate (63) has a plurality of long holes (64) with the same shape. These long holes (64) are symmetrically placed. In the rotor iron core (61), these long holes (64) connected together in the axial direction form a plurality of magnet slots (65). Each rotor plate (63) has, at its center, a round hole (66). **In** the rotor iron core (61), these round holes (66) connected together in the axial direction form a bearing hole (67).

The permanent magnets (62) are each housed in an associated one of the magnet slots (65) formed in the rotor iron core (61). The permanent magnets (62) are, for example, rare earth magnets, alnico magnets, ferrite magnets, or bonded magnets.

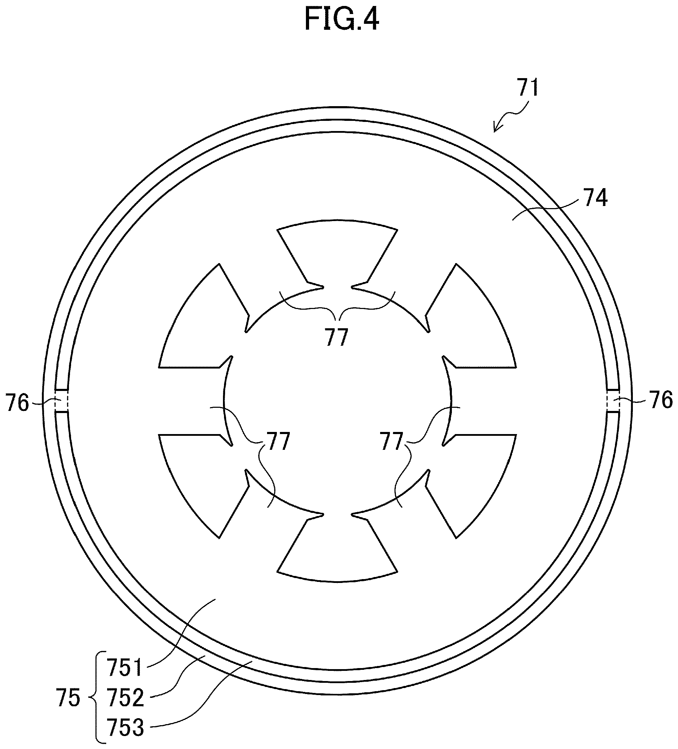

As illustrated in FIG. 4, the stator (70) includes a stator iron core (71), insulators (72), and windings (73).

The stator iron core (71) is a so-called laminated core including a plurality of ring-shaped stator plates (74) laminated in the axial direction. The stator plates (74) are configured as pressed electromagnetic steel sheets, for example. Each adjacent pair of the stator plates (74) is fixed to each other through crimping, for example.

The stator iron core (71) includes a back yoke (75) forming a ring-shaped portion near the outer periphery thereof. The back yoke (75) includes an inner ring-shaped first core portion (751), an outer ring-shaped second core portion (752) facing the first core portion (751) in the radial direction, and an intermediate ring-shaped elastically deformable member (753) provided between the first core portion (751) and the second core portion (752).

The elastically deformable member (753) is, for example, a structure having openings discontinuously formed between the first core portion (751) and the second core portion (752) to extend in an arc shape along the circumferential direction and coupling portions (76) coupling the first core portion (751) and the second core portion (752) together between the openings. The elastically deformable member (753) regulates propagation of axial, radial, and circumferential vibrations of the first core portion (751) due to the electromagnetic force acting between the rotor (60) and the stator (70) to the second core portion (752).

The stator iron core (71) includes a plurality of teeth (77) each protruding and extending radially inward from the first core portion (751) forming an inner portion of the back yoke (75). The plurality of teeth (77) are spaced apart from one another in the circumferential direction.

The stator iron core (71) is configured such that the first core portion (751) and the second core portion (752) of the back yoke (75), the coupling portions (76) of the elastically deformable member (753), and the plurality of teeth (77) are integrated together.

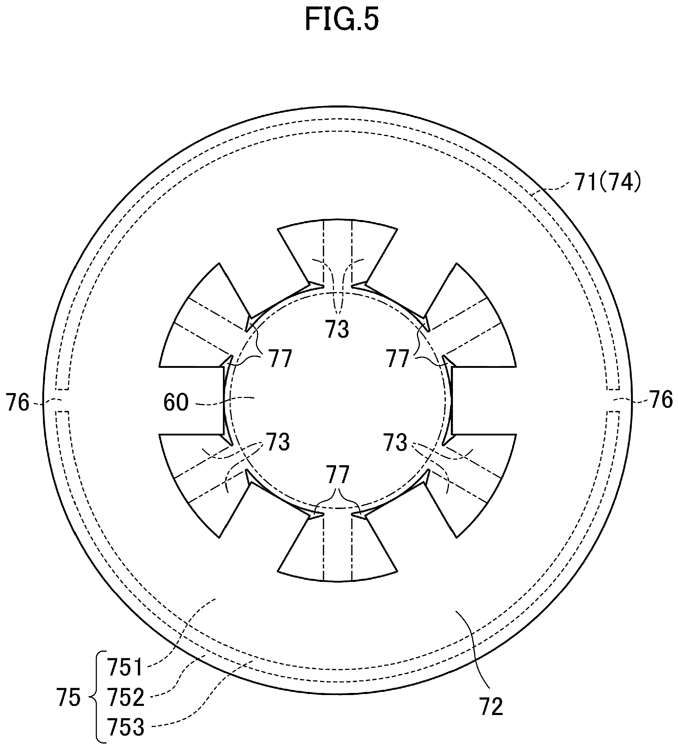

As illustrated in FIG. 5, the insulators (72) are plate-shaped members having substantially the same shape as the stator plates (74). The insulators (72) are stacked at both axial ends of the stator iron core (71). The insulators (72) are configured as rigid members made of, for example, an insulative resin material.

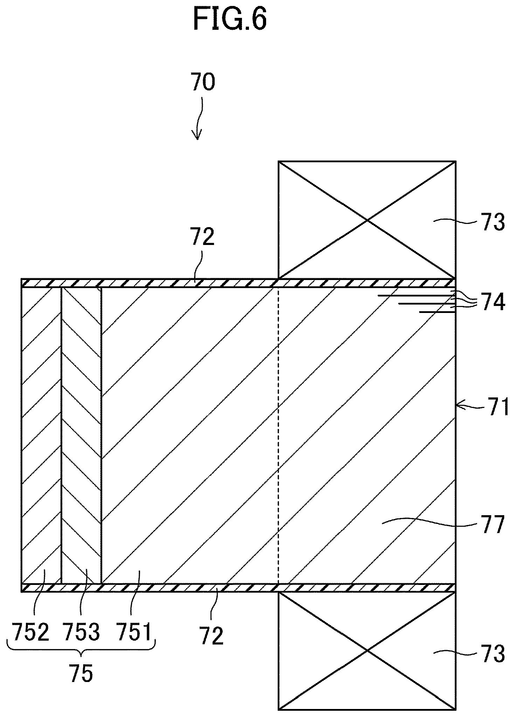

FIG. 6 illustrates a partial longitudinal sectional view of the stator (70). The partial longitudinal sectional view as used herein means a radial view of an optionally selected area of a cross section assumed to be taken along a plane along the axial direction. As illustrated in FIG. 6, the windings (73) are wound around the plurality of associated teeth (77) of the stator iron core (71) from above the insulator (72). Thus, the insulators (72) are interposed between the teeth (77) and the windings (73) at both axial ends of the stator iron core (71). The windings (73) are electrically connected to a power source (not shown).

How the windings (73) are wound around the associated teeth (77) in a method for manufacturing the electric motor (30) will be described here.

The windings (73) are wound around the teeth (77) using a winding machine. During this winding, the stator iron core (71) including the insulators (72) stacked at both axial ends thereof is fixed by a fixture (not shown) of the winding machine, and the windings (73) are wound around the teeth (77). At this time, the teeth (77) undergo reciprocating displacement in the axial direction so as to be deformed. This deformation leads to generation of stress. If attention is paid only to the stator iron core (71), this stress is expected to concentrate on the elastically deformable member (753) forming a low-strength part of the back yoke (75) near the root ends of the teeth (77).

To address this problem, in the electric motor (30) with the configuration described above, the insulators (72), which are rigid members with the same shape as the stator iron core (71), are stacked at both axial ends of the stator iron core (71). The insulators (72) overlap with the first core portion (751) and the second core portion (752) as viewed in the axial direction. As a result, the elastically deformable member (753) forming the low-strength part is covered with the insulators (72) so as to be reinforced. This reduces the axial displacement of the teeth (77) during winding of the windings (73) around the teeth (77). Thus, provision of such mechanisms configured as the insulators (72) relaxes the concentration of stress generated along with the deformation corresponding to the axial reciprocating displacement of the teeth (77) on the elastically deformable member (753) forming the low-strength part. This can reduce breakage of the stator iron core (71) during winding of the winding (73) around the tooth (77). The mechanism configured as the insulator (72) may be provided only at one axial end of the stator iron core (71).

Moreover, the mechanisms configured as the insulators (72) are provided throughout the perimeter of the stator iron core (71). Thus, the mechanisms are provided on a region located radially from the teeth (77) around which the windings (73) are wound, i.e., a region most significantly affected by the winding of the windings (73) around the teeth (77). This can reduce the axial displacement of the tooth (77) during the winding of the winding (73) around the tooth (77). The mechanisms configured as the insulators (72) merely need to function to reduce the axial displacement of the teeth (77) during the winding of the windings (73) around the teeth (77). Thus, the mechanisms do not always need to be provided throughout the perimeter of the stator iron core (71). Thus, when a portion of each insulator (72) that is not involved in the function from the insulator (72) is removed, the material can be reduced, resulting in a cost reduction.

As described above, the insulators (72) have the inherent function of providing insulation while being interposed between the teeth (77) and the windings (73), and function also as mechanisms for reducing the axial displacement of the teeth (77) during the winding of the windings (73) around the teeth (77).

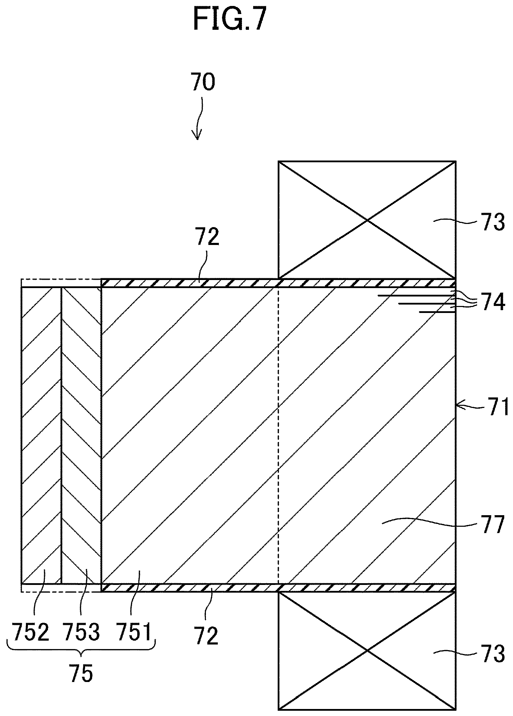

In contrast, the elastically deformable member (753) is covered with the insulators (72), thereby regulating the axial deformation of the elastically deformable member (753). This diminishes the axial vibration absorption capacity of the elastically deformable portion (753). To address this problem, after the winding of the windings (73) around the teeth (77), portions of the insulators (72) covering the second core portion (752) and the elastically deformable member (753) may be removed as illustrated in FIG. 7. This allows the elastically deformable member (753) to exhibit its axial vibration absorption capacity. At this time, if the insulators (72) are partially removed using the openings between the first core portion (751) and the second core portion (752), the insulators (72) can be machined without causing damage to the stator iron core (71).

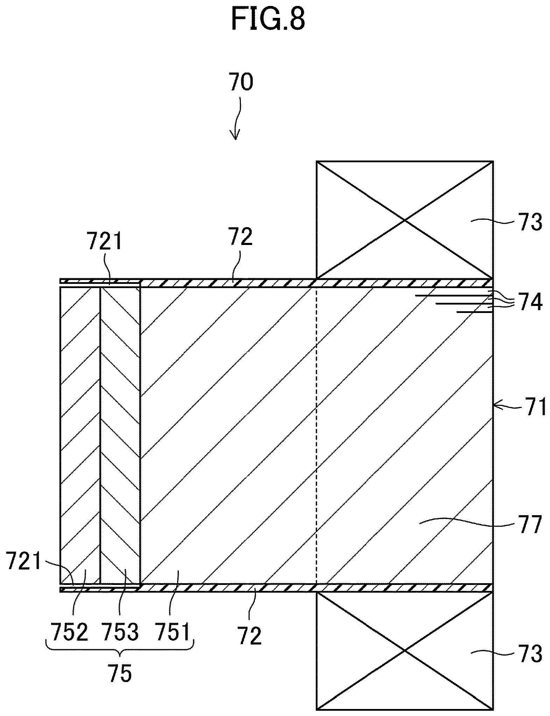

As illustrated in FIG. 8, the portions of the insulators (72) covering the second core portion (752) and the elastically deformable member (753) may each have an air gap (721) between the insulator (72) and a combination of the second core portion (752) and the elastically deformable member (753). That is to say, each insulator (72) may face the second core portion (752) and the elastically deformable member (753) in the axial direction with the air gap (721) interposed therebetween. **In** one preferred embodiment, if the degree of the displacement during the winding of the windings (73) is high, the air gap (721) is sized to allow the elastically deformable member (753) to be in contact with the insulator (72) to reduce the axial displacement, and if the degree of the displacement during rotation of the electric motor (30) after the winding of the windings (73) is low, the air gap (721) is sized to allow the elastically deformable member (753) to exhibit its vibration absorption capacity without being in contact with the insulator (72). This can lower the degree of the axial displacement of the elastically deformable member (753) during the winding of the windings (73), and allows the elastically deformable member (753) to exhibit its axial vibration absorption capacity without removing the portions of the insulators (72) covering the elastically deformable member (753) after the winding of the windings (73). In addition, each air gap (721) is present between the combination of the second core portion (752) and the elastically deformable member (753) and the associated insulator (72) in the axial direction. Thus, the friction produced between the elastically deformable member (753) and the insulators (72) by radial and circumferential displacements is reduced. Accordingly, the radial and circumferential vibration absorption capacities of the elastically deformable member (753) are not further diminished. The air gap (721) may be provided not at each of two axial ends of the stator (70) but only at one of the two axial ends.

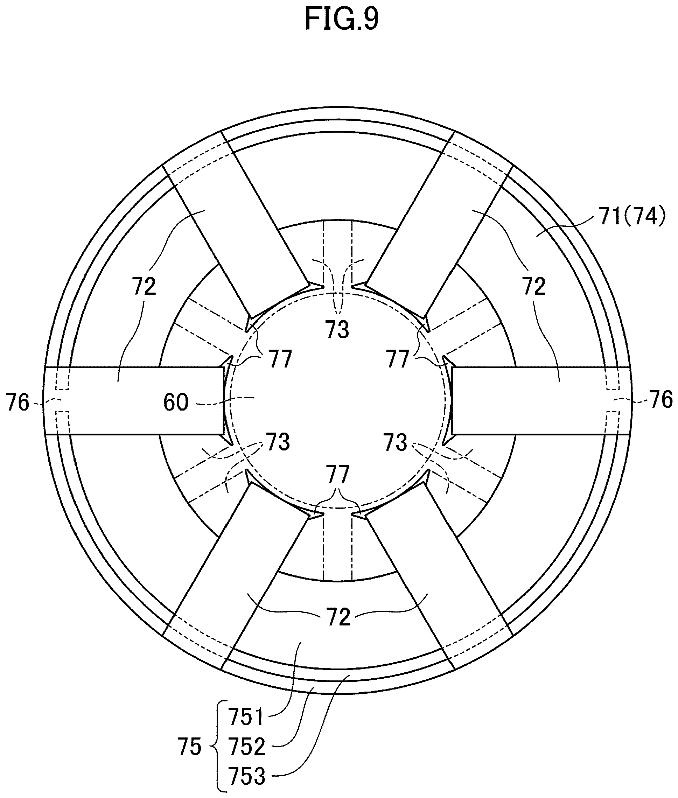

As illustrated in FIG. 9, each insulator (72) may be divided into a plurality of parts so that the parts correspond to the respective teeth (77). In this case, the mechanisms configured as the insulators (72) to reduce the axial displacement of the teeth (77) during the winding of the windings (73) around the teeth (77) are independent of one another to correspond with the respective teeth (77). Thus, each of the teeth (77) around which the windings (73) are wound is independently displaced in the axial direction. This can substantially prevent the displacement from affecting the other teeth (77) via the insulators (72).

Some of a plurality of insulators (72) resulting from the division may function to reduce the axial displacement of the teeth (77) during the winding of the windings (73) around the teeth (77). Thus, in this case, the insulators (72) that do not exhibit the function merely need to exhibit only the function of insulation. Accordingly, the size of such insulators (72) is reduced to approximately the size of the teeth (77), and the material can be reduced, resulting in a cost reduction.

Also in this case, just like the above-described configuration shown in FIG. 8, the portions of the insulators (72) covering the second core portion (752) and the elastically deformable member (753) may each have an air gap (721) between the insulator (72) and a combination of the second core portion (752) and the elastically deformable member (753). That is to say, each insulator (72) may face the second core portion (752) and the elastically deformable member (753) in the axial direction with the air gap (721) interposed therebetween. In one preferred embodiment, this air gap (721) is formed in each of the insulators (72) located on both axial sides of the stator (70). However, the air gap (721) merely needs to be formed in at least one of the insulators (72) located on both axial sides of the stator (70).

The electric motor (30) with the configuration described above allows its rotor (40) to rotate around the rotation axis thereof by the action of the permanent magnets (62) being attracted to the motion of a rotating magnetic field generated by the passage of electric current through the windings (73) wound around the teeth (77) of the stator (70).

### <Drive Shaft (40)>

The drive shaft (40) is provided in the casing (20) to extend vertically along the axial center of the casing (20). The drive shaft (40) has a lower end portion rotatably supported by a bearing (41). The drive shaft (40) has an upper portion inserted and fixed into the bearing hole of the rotor (60) of the electric motor (30). The drive shaft (40) is rotationally driven by the electric motor (30).

### <Compression Mechanism (50)>

The compression mechanism (50) is provided while being supported by a lower portion of the electric motor (30) inside the casing (20). The compression mechanism (50) includes a cylinder (51) and a piston (52). The piston (52) is coupled to the drive shaft (40), and is provided inside the cylinder (51). A cylinder chamber (53) is formed between the inner peripheral surface of the cylinder (51) and the outer peripheral surface of the piston (52).

The compression mechanism (50) has a suction pipe (54) and a discharge pipe (55). The suction pipe (54) radially penetrates the barrel (21) of the casing (20), and communicates with the cylinder chamber (53) of the compression mechanism (50). The discharge pipe (55) axially penetrates the top portion (23) of the casing (20), and communicates with the internal space of the casing (20).

Low-pressure refrigerant from the refrigerant circuit (R) is sucked into the cylinder chamber (53) of the compression mechanism (50) through the suction pipe (54). The compression mechanism (50) compresses the refrigerant in the cylinder chamber (53) by a piston (52) driven by the drive shaft (40). The inside of the casing (20) is filled with high-pressure refrigerant discharged from the compression mechanism (50). The high-pressure refrigerant flows through the electric motor (30), and is then discharged to the refrigerant circuit (R) through the discharge pipe (55).

### [Second Embodiment]

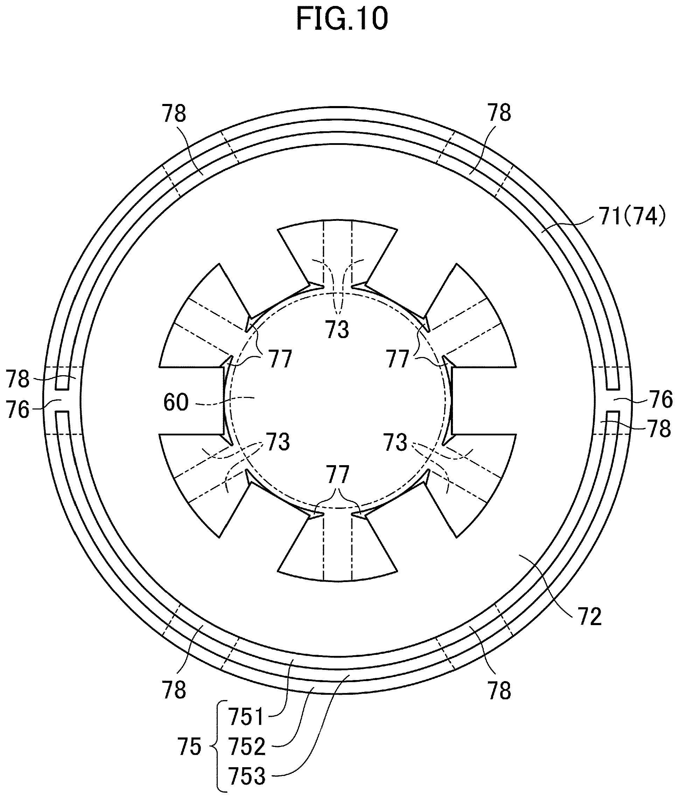

In a second embodiment not belonging to the present invention, as illustrated in FIG. 10, insulators (72) included in a stator (70) of an electric motor (30) each have a shape similar to the shape of a combination of an inner peripheral portion of a first core portion (751) of a back yoke (75) of a stator iron core (71) and a plurality of teeth (77). Thus, an outer peripheral portion of the first core portion (751), a second core portion (752), and an elastically deformable member (753) are exposed at both axial ends of the stator iron core (71). Portions of each of these exposed areas located radially from the teeth (77) are each provided with a fixture retaining portion (78).

How the windings (73) are wound around the associated teeth (77) in a method for manufacturing the electric motor (30) will be described here.

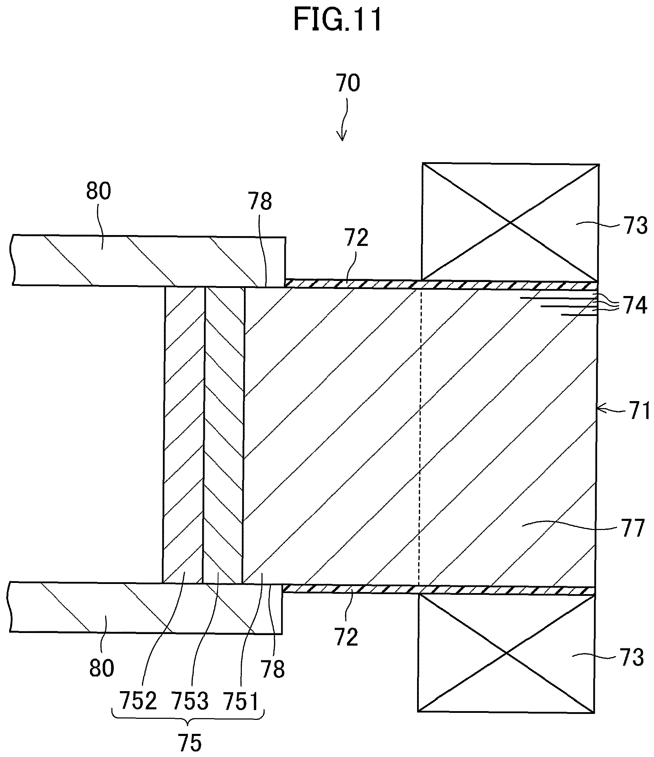

The windings (73) are wound around the teeth (77) using a winding machine. At this time, as illustrated in FIG. 11, the first core portion (751) is fixed by being caught by a fixture (80) of the winding machine positioned on the fixture retaining portion (78) forming the portion located radially from the teeth (77) around which the windings (73) are wound, at both axial ends of the stator iron core (71). Then, the windings (73) are wound around the respective teeth (77) with the first core portion (751) fixed.

**In** the electric motor (30) with the configuration described above, the fixture (80) of the winding machine fixes the first core portion (751) of the stator iron core (71) during the winding of the windings (73) around the teeth (77). Thus, the elastically deformable member (753) is less affected by the winding of the windings (73) around the teeth (77). Accordingly, the axial displacement of the teeth (77) during the winding of the windings (73) around the teeth (77) is reduced. Thus, such mechanisms configured as the fixture retaining portions (78) provided relaxes the concentration of stress generated along with the deformation corresponding to the axial reciprocating displacement of the teeth (77) on the elastically deformable member (753) forming the low-strength part. This can reduce breakage of the stator iron core (71) during winding of the winding (73) around the tooth (77).

Moreover, the mechanisms configured as the fixture retaining portions (78) are provided on a region located radially from the teeth (77) around which the windings (73) are wound, i.e., a region most significantly affected by the winding of the windings (73) around the teeth (77). This can reduce the axial displacement of the tooth (77) during the winding of the winding (73) around the tooth (77).

The mechanisms configured as the fixture retaining portions (78) are independent of one another to correspond to the respective teeth (77). Thus, each of the teeth (77) around which the windings (73) are wound is independently displaced in the axial direction. This can substantially prevent the displacement from affecting the other teeth (77).

This embodiment is the same as or similar to the first embodiment in terms of the other configurations.

### [Other Embodiments]

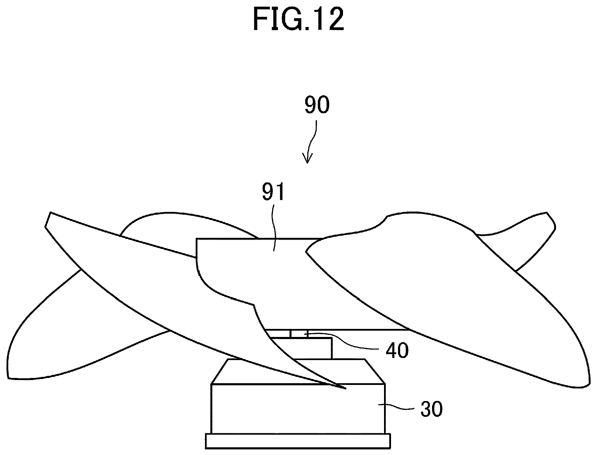

FIG. 12 is a side view of a fan (90). The side view as used herein means a radial view. Each of the first embodiment and the second embodiment describes the compressor (10) including the electric motor (30) serving as the rotating electrical machine. However, this compressor (10) is merely an example. As illustrated in FIG. 12, a fan (90) may include an electric motor (30) with a similar configuration and an impeller (91) attached to a drive shaft (40) extending from the electric motor (30). Such a fan (90) can be used for, for example, an outdoor unit of an air conditioner. A sirocco fan may be configured as a fan including the electric motor (30) with a similar configuration.

Each of the first embodiment and the second embodiment describes the inner-rotor electric motor (30). However, this electric motor (30) is merely an example. The electric motor (30) may be an outer-rotor electric motor including a rotor located near the outside diameter thereof and configured to be rotatable around the rotation axis thereof, and a stator located near the inside diameter thereof and spaced apart from the rotor to face the rotor in the radial direction.

### INDUSTRIAL APPLICABILITY

The present invention is useful for technical fields of a rotating electrical machine, a manufacturing method therefor, a compressor, a fan, and a refrigeration apparatus equipped with the rotating electrical machine.

### DESCRIPTION OF REFERENCE CHARACTERS

- 1: Refrigeration Apparatus
- 10: Compressor
- 30: Electric Motor (Rotating Electrical Machine)
- 60: Rotor
- 70: Stator
- 71: Stator Iron Core
- 72: Insulator
- 73: Winding
- 751: First Core Portion
- 752: Second Core Portion
- 753: Elastically Deformable Member
- 77: Tooth
- 78: Fixture Retaining Portion
- 80: Fixture
- 90: Fan

## Claims

1. A rotating electrical machine (30) including: a rotor (60) configured to be rotatable around a rotation axis of the rotor (60); and a stator (70) facing the rotor (60) in a radial direction,
the stator (70) including: a stator iron core (71) including a first core portion (751), a second core portion (752) facing the first core portion (751) in the radial direction, an elastically deformable member (753) between the first core portion (751) and the second core portion (752), and a tooth (77) provided opposite to the second core portion (752) with respect to the first core portion (751) and extending radially from the first core portion (751), the first core portion (751), the second core portion (752), the elastically deformable member (753), and the tooth (77) being integrated together; and a winding (73) wound around the tooth (77) of the stator iron core (71),
a mechanism configured to reduce an axial displacement of the tooth (77) during winding of the winding (73) around the tooth (77) being provided
**characterized in that**
the mechanism is a rigid member disposed at an axial end of the stator iron core (71) and overlapping with the first core portion (751) and the second core portion (752) as viewed in an axial direction,
the stator (70) further includes an insulator (72) interposed between the tooth (77) and the winding (73) at the axial end, and
the rigid member is the insulator (72) and
that a gap (721) in the axial direction is present between the insulator (72) and a combination of the second core portion (752) and the elastically deformable member (753).

2. The rotating electrical machine of claim 1, wherein
the mechanism is provided on a region located radially from the tooth (77).

3. The rotating electrical machine of any one of claims 1 to 2, wherein
the tooth (77) includes a plurality of teeth (77) spaced apart from one another in a circumferential direction, and
the mechanism includes a plurality of mechanisms independent of one another so that the plurality of mechanisms corresponds to the plurality of teeth (77).

4. The rotating electrical machine of any one of claims 1 to 3, wherein
the tooth (77) extends radially inward from the first core portion (751).

5. A compressor comprising: the rotating electrical machine (30) of any one of claims 1 to 4.

6. A fan comprising: the rotating electrical machine (30) of any one of claims 1 to 4.

7. A refrigeration apparatus comprising: the rotating electrical machine (30) of any one of claims 1 to 4.

## Patentansprüche

1. Rotierende elektrische Maschine (30), umfassend: einen Rotor (60), der konfiguriert ist, um um eine Drehachse des Rotors (60) drehbar zu sein; und einen Stator (70), der dem Rotor (60) in einer radialen Richtung zugewandt ist,
wobei der Stator (70) umfasst: einen Statoreisenkern (71), umfassend einen ersten Kernabschnitt (751), einen zweiten Kernabschnitt (752), der dem ersten Kernabschnitt (751) in der radialen Richtung zugewandt ist, ein elastisch verformbares Element (753) zwischen dem ersten Kernabschnitt (751) und dem zweiten Kernabschnitt (752), und einen Zahn (77), der gegenüber dem zweiten Kernabschnitt (752) in Bezug auf den ersten Kernabschnitt (751) bereitgestellt ist und sich radial von dem ersten Kernabschnitt (751) erstreckt, wobei der erste Kernabschnitt (751), der zweite Kernabschnitt (752), das elastisch verformbare Element (753) und der Zahn (77) miteinander integriert sind; und eine Wicklung (73), die um den Zahn (77) des Statoreisenkers (71) gewickelt ist,
einen Mechanismus, der konfiguriert ist, um eine axiale Verschiebung des Zahns (77) während des Wickelns der Wicklung (73) um den Zahn (77) zu reduzieren,
**dadurch gekennzeichnet, dass**
der Mechanismus ein starres Element ist, das an einem axialen Ende des Statoreisenkers (71) angeordnet ist und mit dem ersten Kernabschnitt (751) und dem zweiten Kernabschnitt (752) überlappt, wenn in einer axialen Richtung betrachtet,
der Stator (70) ferner einen Isolator (72) umfasst, der zwischen dem Zahn (77) und der Wicklung (73) an dem axialen Ende angeordnet ist, und
das starre Element der Isolator (72) ist und
dass ein Spalt (721) in der axialen Richtung zwischen dem Isolator (72) und einer Kombination des zweiten Kernabschnitts (752) und des elastisch verformbaren Elements (753) vorhanden ist.

2. Rotierende elektrische Maschine nach Anspruch 1, wobei
der Mechanismus an einem Bereich vorgesehen ist, der sich radial von dem Zahn (77) befindet.

3. Rotierende elektrische Maschine nach einem der Ansprüche 1 bis 2, wobei
der Zahn (77) eine Vielzahl von Zähnen (77) umfasst, die in einer Umfangsrichtung voneinander beabstandet sind, und
der Mechanismus eine Vielzahl von Mechanismen umfasst, die voneinander unabhängig sind, so dass die Vielzahl von Mechanismen der Vielzahl von Zähnen (77) entspricht.

4. Rotierende elektrische Maschine nach einem der Ansprüche 1 bis 3, wobei
sich der Zahn (77) von dem ersten Kernabschnitt (751) radial nach innen erstreckt.

5. Verdichter, umfassend: die rotierende elektrische Maschine (30) nach einem der Ansprüche 1 bis 4.

6. Gebläse, umfassend: die rotierende elektrische Maschine (30) nach einem der Ansprüche 1 bis 4.

7. Kühlvorrichtung, umfassend: die rotierende elektrische Maschine (30) nach einem der Ansprüche 1 bis 4.

## Revendications

1. Machine électrique rotative (30) comprenant: un rotor (60) configuré pour pouvoir tourner autour d'un axe de rotation du rotor (60) ; et un stator (70) situé face au rotor (60) dans le sens radial,
le stator (70) comprenant : un noyau ferreux de stator (71) comprenant une première partie noyau (751), une deuxième partie noyau (752) située face à la première partie noyau (751) dans le sens radial, un élément déformable élastiquement (753) entre la première partie noyau (751) et la deuxième partie noyau (752), et une dent (77) agencée face à la deuxième partie noyau (752) relativement à la première partie noyau (751), et s'étendant radialement depuis la première partie noyau (751), la première partie noyau (751), la deuxième partie noyau (752), l'élément déformable élastiquement (753), et la dent (77) étant intégrés ensemble ; et un bobinage (73) enroulé autour de la dent (77) du noyau ferreux de stator (71),
un mécanisme configuré pour réduire un déplacement axial de la dent (77) au cours de l'enroulement du bobinage (73) autour de la dent (77) étant agencé,
**caractérisée en ce que**
le mécanisme est un élément rigide disposé à une extrémité axiale du noyau ferreux de stator (71), et chevauchant la première partie noyau (751) et la deuxième partie noyau (752) vu dans le sens axial,
le stator (70) comprenant en outre un isolateur (72) intercalé entre la dent (77) et le bobinage (73) à l'extrémité axiale, et
l'élément rigide est l'isolateur (72), et
un écart (721) dans le sens axial est présent entre l'isolateur (72) et une combinaison de la deuxième partie noyau (752) et de l'élément déformable élastiquement (753).

2. Machine électrique rotative selon la revendication 1,
le mécanisme étant agencé sur une zone située radialement depuis la dent (77).

3. Machine électrique rotative selon une quelconque des revendications 1 à 2,
la dent (77) comprenant une pluralité de dents (77) espacées l'une de l'autre dans le sens circonférentiel, et
le mécanisme comprenant une pluralité de mécanismes indépendants l'un de l'autre, de sorte que la pluralité de mécanismes corresponde à la pluralité de dents (77).

4. Machine électrique rotative selon une quelconque des revendications 1 à 3, la dent (77) s'étendant de la première partie noyau (751) radialement vers l'intérieur.

5. Compresseur comprenant la machine électrique rotative (30) selon une quelconque des revendications 1 à 4.

6. Ventilateur comprenant la machine électrique rotative (30) selon une quelconque des revendications 1 à 4.

7. Appareil de réfrigération comprenant la machine électrique rotative (30) selon une quelconque des revendications 1 à 4.
